# EUROPÄISCHE PATENTSCHRIFT

(11) **EP 0 590 483 B1**
(45) Veröffentlichungstag und Bekanntmachung des Hinweises auf die Patenterteilung: **12.03.1997**
(21) Anmeldenummer: 93115231.8
(22) Anmeldetag: 22.09.1993
(51) Int. Cl.: H02M 7/217, H02M 7/10, H02M 3/335, G05F 1/614, H03F 3/183

(54) **Netzteil für eine NF-Ton-Endstufe**
Power supply of a low frequency final sound stage
Boîte d'alimentation en courant pour un étage audio de sorti à basse fréquence

(30) Priorität: 30.09.1992 DE 4232867
(43) Veröffentlichungstag der Anmeldung: 06.04.1994
(73) Patentinhaber: DEUTSCHE THOMSON-BRANDT GMBH, 78048 Villingen-Schwenningen (DE)
(72) Erfinder: Palata, Jaromir, D-78052 Villingen-Schwenningen (DE); Louvel, Jean-Paul, D-78050 Villingen-Schwenningen (DE)

(56) Entgegenhaltungen:
- EP-A- 0 462 483
- US-A- 5 126 652

## Beschreibung

Die Erfindung geht aus von einem Netzteil für eine NF-Ton-Endstufe gemäß dem Oberbegriff des Anspruchs 1, wie es beispielsweise aus der EP-A-0 462 483 bekannt ist.

Für die NF-Ton-Endstufe in einem Fernsehempfänger ist eine Betriebsspannung erwünscht, die mit sinkendem Laststrom durch die Ton-Endstufe ansteigt. Dadurch wird erreicht, daß z.B. bei kleinem Laststrom eine sogenannte kurzzeitige Musikleistung von 20 Watt und bei großem Laststrom eine permanente sogenannte Sinusleistung von 5 Watt erzielt werden kann.

Es ist bekannt, zur Erzeugung einer Betriebsspannung, die mit kleinem Laststrom ansteigt, einen speziellen Trafo zu wickeln, der eine Gleichrichterschaltung für die NF-Endstufe ansteuert. Die Entwicklung eines derartigen Transformators ist jedoch relativ kompliziert und kostspielig, weil die Konstruktionsparameter zur Erzielung der gewünschten Spannungsabhängigkeit nur empirisch ermittelt werden. Es ist dann notwendig, zunächst eine Vielzahl von Trafos zu wickeln, um zu einem Transformator mit den gewünschten Eigenschaften zu gelangen.

Der Erfindung liegt die Aufgabe zugrunde, eine einfache und mit geringer Verlustleistung arbeitende Schaltung zur Erzeugung einer Betriebsspannung mit der beschriebenen Abhängigkeit vom Laststrom zu schaffen, die keine konstruktiven Änderungen an dem die Schaltung steuernden Transformator benötigt. Diese Aufgabe wird durch die im Anspruch 1 angegebene Erfindung gelöst. Vorteilhafte Weiterbildungen der Erfindung sind in den Unteransprüchen angegeben.

Die Erfindung beruht auf folgender Überlegung. Durch die Parallelschaltung eines üblichen Einweggleichrichters mit einer Spannungs-Verdopplerschaltung, die an sich etwa die doppelte Gleichspannung liefert wie der Einweggleichrichter, kann in überraschender Weise folgendes erreicht werden. Bei relativ hohem Laststrom bestimmt der Einweggleichrichter die Spannung an der Last, wobei diese Spannung durch eine Regelschaltung primärseitig stabilisiert wird. Bei sinkendem Laststrom hingegen wird die Spannungs-Verdopplerschaltung mehr und mehr wirksam. Da die Spannungs-Verdopplerschaltung etwa die doppelte Spannung liefert wie der Einweggleichrichter, wird somit die Spannung an der Last durch den steigenden Einfluß der Spannung-Verdopplerschaltung erhöht. Der Einweggleichrichter einerseits und die Spannungs-Verdopplerschaltung andererseits lösen einander also in ihrer Wirksamkeit für die an der Last stehende Betriebsspannung in vorteilhafter Weise selbsttätig ab, ohne daß dafür eine Umschaltung zwischen den beiden Gleichrichterschaltungen erforderlich ist. Der Strom, bei dem sich die Gleichrichter ablösen, hängt ab von der Größe des Koppelkondensators C der am Eingang des Verdopplers liegt.

Die Spannungs-Verdopplerschaltung kann derart angesteuert werden, daß bei geringem Strom durch die Last die doppelte Spannung zur Verfügung steht und bei hohen Strom die einfache Spannung konstant gehalten wird. Ein derart ansteuerbarer Kurvenverlauf macht es möglich, eine konstante Sinusleistung beizubehalten, aber eine hohe Musikleistung zu ermöglichen.

Die erfindungsgemäße Schaltung bringt mehrere Vorteile. Zum einem braucht der Trafo nicht mehr speziell gewickelt zu werden. Weiterhin braucht kein spezieller Trafo verwendet zu werden, so daß ein vorhandener Trafo die Gleichrichterschaltung für die NF-Endstufe mit ansteuern kann. Die erfindungsgemäße Schaltung mit wenigen Bauteilen ist wesentlich billiger und einfacher realisierbar als die Entwicklung und Herstellung eines speziellen Transformators. Der Transformator kann dann unabhängig von der Ton-Endstufe nach anderen Gesichtspunkten optimal bemessen werden. Das ist besonders teilhaft, wenn von dem Transformator noch weitere Betriebsspannungen abgeleitet werden sollen, die die genannten Abhängigkeit vom Laststrom nicht aufweisen, sondern in Abhängigkeit vom Laststrom möglichst konstant sein sollen. Die Erfindung ist sowohl anwendbar für einen reinen Netztransformator bei 50 Hz als auch für den Transformator eines Schaltnetzteils, der vorzugsweise bei Frequenzen von 15 - 30 kHz arbeitet.

Einige Ausführungsbeispiele der Erfindung sind in den Zeichnungen dargestellt und werden im folgenden näher erläutert. Darin zeigen:
- Fig. 1: Netzteil mit ansteuerbaren Schaltern für die Spannungs-Verdoppelung,
- Fig. 2: den gewünschten Kurvenverlauf der Spannung in Abhängigkeit vom Laststrom,
- Fig. 3: ein Netzteil mit Spannungs-Verdopplerschaltung parallel zum Gleichrichter,
- Fig. 4: ein Netzteil mit Transistor abschaltbarer Span nungs-Verdopplerschaltung parallel zum Gleichrichter,
- Fig. 5: ein Netzteil mit Thyristor gesteuerter Spannungs-Verdopplerschaltung parallel zum Gleichrichter für positive Spannungsversorgung,
- Fig. 6: eine Weiterbildung der Erfindung für symmetrische Spannungsversorgung.

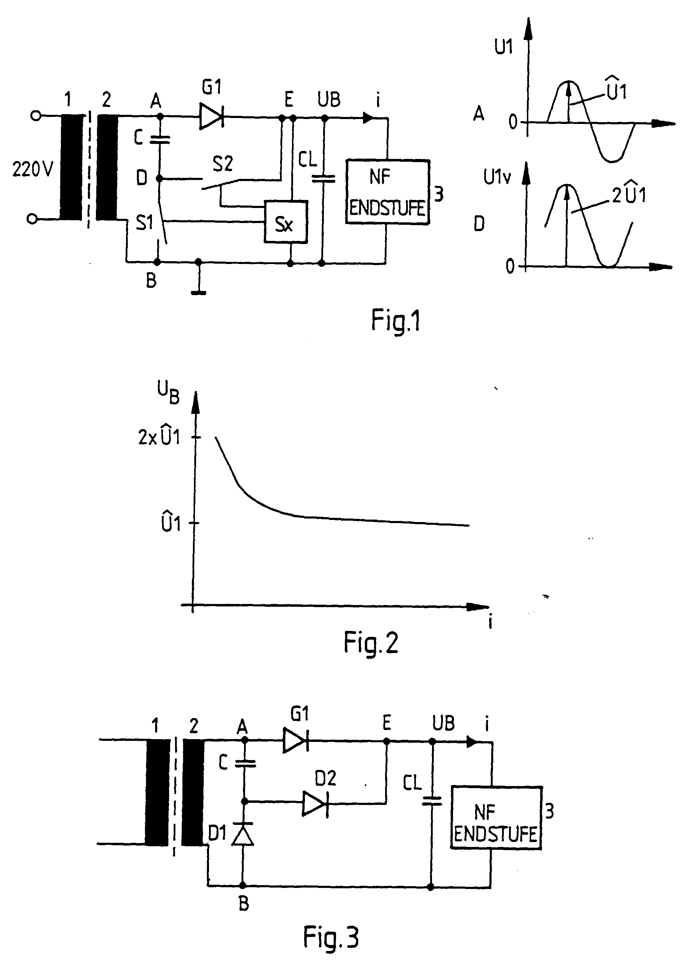

Fig. 1 zeigt einen Transformator mit einer Primärwicklung 1 und einer Sekundärwicklung 2, die über einen Gleichrichter G1 und eine dazu parallel liegenden Spannungs-Verdopplerschaltung S1, S2, Sx, C, CL die NF-Endstufe 3 mit dem Strom i und der Spannung UB versorgen. Die Schaltung funktioniert wie folgt:

Ist der Punkt A negativer als Punkt B, wird über den Schalter S1 der Kondensator C auf die Spannung Û1 geladen. Im Maximum der positiven Halbwelle bei dem Punkt, ist der Schalter S1 geöffnet und es liegt am Schalter S1 die Spannung 2x Û1. Diese Spannung wird über den dann geschlossenen Schalter S2 an den Kondensator CL übertragen. Es liegt am C jeweils die Spannung Û1 und an CL jeweils die Spannung 2 x Û1. Die Ausgangsspannung UB würde jeweils nur von einer Halbschwingung erzeugt werden, wenn nicht parallel zu dem Gleichrichter G1 die Verdopplerschaltung wäre. Der Gleichrichter G1 sorgt dafür, daß mindestens immer die Spannung Û1 zur Verfügung steht. Durch eine geschickte Ansteuerung der Schalter S1 und S2 durch die Schaltung Sx ist gewährleistet, daß die Abhängigkeit der Spannung UB vom Strom i nach oben begrenzbar ist. Im rechten Teil der Fig. 1 sind die Spannungen an den Punkte A und B dargestellt. Wenn der Punkt B als Erde angenommen wird, steht am Punkt A die gleichspannungsfreie Wechselspannung U1 mit der Amplitude oder dem positiven oder negativen Spitzenwert Û1. Durch den bei der negativen Spitze von Û1 geschlossener Schalter S1 kann die Spannung am Punkt D gegenüber Erde nicht negativ werde. Die erste Halbwelle lädt den Kondensator auf und die zweite Halbwelle ist mit dem aufgeladenem Kondensator C in Reihe. Beide Halbwellen wurden also spannungsmäßig addiert. Unter die Spannung von dem Einweggleichrichter G1 kann die Spannung UB nicht sinken. Der Anstieg von der Spannung UB mit abnehmender Last oder mit steigender Netzspannung U Netz ist nach obenhin durch die Regelung begrenzt.

Fig. 2 zeigt den gewünschten Spannungsverlauf von UB, wobei die Spannung UB mit sinkendem Strom i zunimmt. Es ist zu erkennen, daß bei kleinem Strom i die Spannung UB auf den doppelten Wert ansteigt und bei großem Strom i die Spannung UB auf dem einfachen Wert konstant gehalten wird. Die Musikleitung UBmax * imax ist somit sehr hoch und der Sinusleitung UBmax * imax erheblich kleiner. Die Lastabhängigkeit der Spannung UB ist mit der Größe des Kondensators C einstellbar.

Fig. 3 ist ähnlich der Fig. 1, wobei die Aufgaben der Schalter S1, S2 die Dioden D1, D2 übernehmen. Die Schaltung nach Fig. 3 arbeitet folgendermaßen: Bei großem Laststrom i erfolgt die Energiezufuhr zum Ladekondensator CL im wesentlichen über den Gleichrichter G1. UB entspricht dann etwa dem Spitzenwert der Spannung am Punkt A. Die Spannungsverdopplerschaltung C, D1, D2 ist dann im wesentlichen unwirksam und liefert nur einen geringen Teil von etwa 10 - 15 % der in den Kondensator CL gelieferten Energie. Bei kleinem Laststrom i indessen wird die Spannungsverdopplerschaltung wirksam, so daß nun die Spannung UB am Punkt E gemäß Fig. 2 ansteigen kann. Der Gleichrichter G1 wird dadurch in erwünschter Weise gesperrt, weil jetzt die Spannung UB größer wird als der Maximalwert der Spannung am Punkt A. Jetzt bestimmt die Spannungsverdopplerschaltung die Spannung UB, so daß diese gemäß Fig. 2 ansteigt. Das jeweils gewünschte Verhalten der Schaltung läßt sich insbesondere durch eine Bemessung des Kondensators C erreichen, der im wesentlichen die über die Spannungsverdopplerschaltung in CL gelieferte Energie bestimmt.

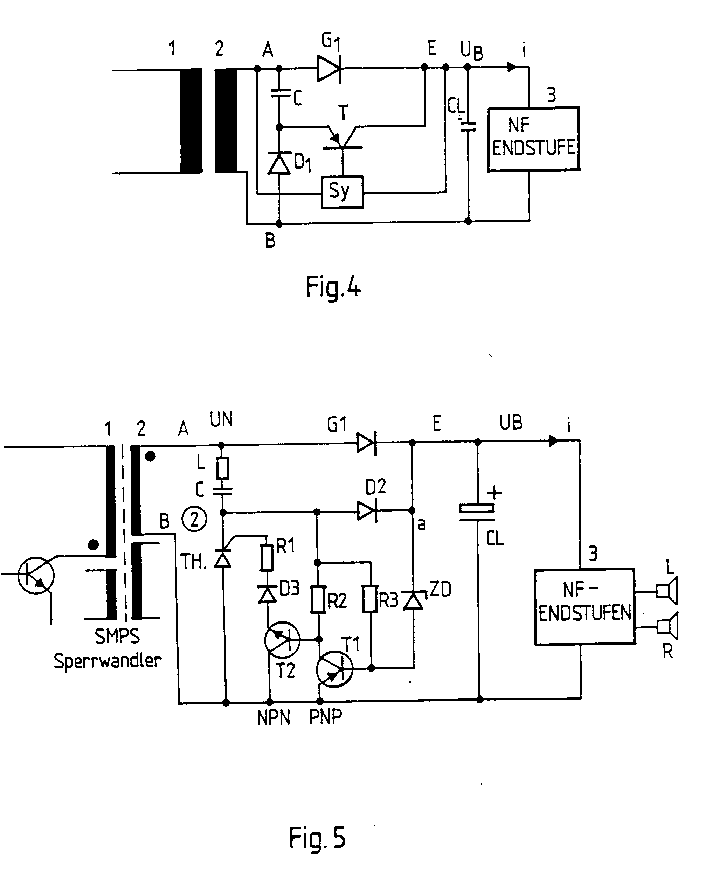

Fig. 4 ist ähnlich der Fig. 3, nur daß die Diode D2 durch den Transistor T ersetzt wurde, damit dieser in Abhängigkeit des Stromes i von der Steuerschaltung Sy angesteuert werden kann.

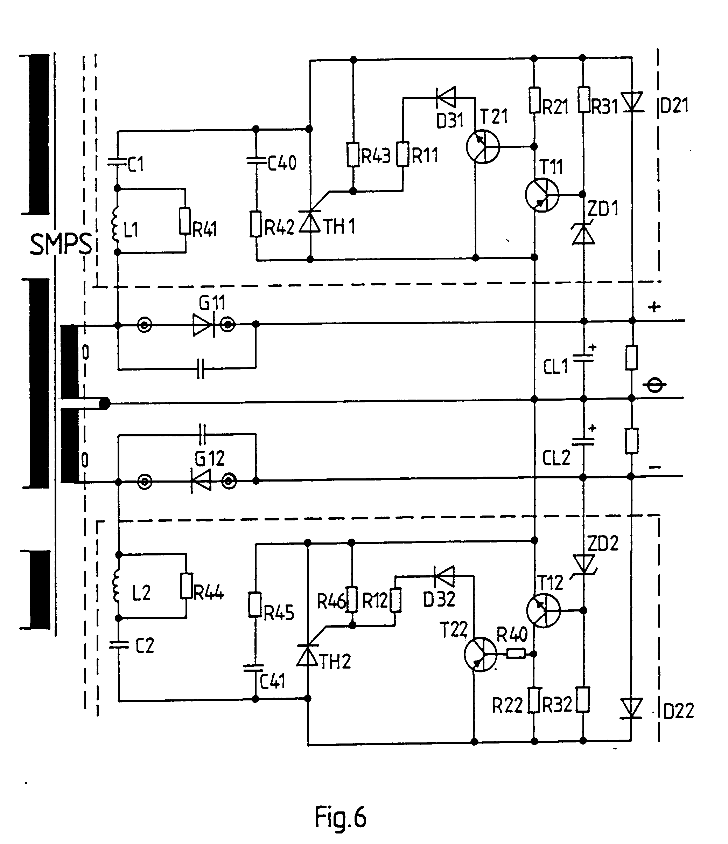

Fig. 5 zeigt eine vollständige Schaltung mit einer geregelten Spannungs-Verdopplerschaltung. Die Diode D1 von Fig. 3 und 4 ist durch den Thyristor Th ersetzt, der in Abhängigkeit von der Spannung UB über die dargestellte Schaltung mit den Transistoren T1, T2, den Widerständen R1, R2, R3, der Diode D3 und der Zenerdiode ZD angesteuert wird. Die Dioden D2, D3 gewährleisten, daß ein Stromfluß jeweils nur in der gewünschten Richtung möglich ist. Die Regelung der Spannungs-Verdopplerschaltung erfolgt folgendermaßen. Wenn die Spannung UB einen durch die Zenerdiode ZD vorgegebenen Wert von z.B. +39 Volt unterschreitet, bleiben die Transistoren T1 und T2 leitend. Es fließt dann am Anfang jeder negativen Halbwelle ein kurzer Gatestrom am Thyristor Th, so daß die Spannungs-Verdopplerschaltung wirksam ist. Wenn die Spannung UB am Punkt E den genannten durch die Zenerdiode ZD vorgegebenen Wert erreicht, werden die Transistoren T1, T2 gesperrt, so daß der Thyristor Th am Gate ohne Ansteuerung ist. Es wird dann keine Energie in den Kondensator C gespeichert, die Spannungs-Verdopplerschaltung C, Th, D2 wird unwirksam, so daß die Spannung UB im Sinne einer Regelung wieder etwas sinkt. Auf diese Weise wird also die von der Spannungs-Verdopplerschaltung bestimmte, mit sinkendem Laststrom i steigende Spannung UB nach oben hin begrenzt.

Es ist noch zu erwähnen, daß die Ansteuerung mit den Transistoren T1, T2 keine nennenswerten Verluste, verursacht, da die Transistoren T1 und T2 ohne Strom eine Spannung, vor der Thyristorzündung hat und nach der Thyristorzündung T1 und T2 spannungslos sind, weil die Transistoren T1 und T2 parallel zum Thyristor Th liegen.

Die Induktivität L in Reihe zum Kondensator C hat dabei noch folgende Bedeutung. Ohne diese Induktivität L würde beim Einschalten durch den Thyristor Th ein relativ hoher Strom fließen, da der Kondensator C zunächst praktisch einen Kurzschluß darstellt. Durch die Induktivität L wird ein derartige Stromspitze vermieden. Das hat den Vorteil, daß ein billigerer Thyristor Th mit geringerer Strombelastung verwendet werden kann.

Fig. 6 zeigt eine Weiterbildung der Erfindung die ähnlich der Fig. 5 ist, aber für symmetrische Spannungsversorgung ausgelegt ist. Der positive Zweig wird gebildet aus dem Gleichrichter G11, der Induktivität L1, der Kapazität C1, dem Thyristor Th.1, dem Widerstand R11, der Diode D31, dem Transistor T21, dem Transistor T11, dem Widerstand R21, dem Widerstand R31, der Zenerdiode ZD1, der Diode D21 und dem Ladekondensator CL1.

Der negative Zweig wird gebildet aus dem Gleichrichter G12, der Induktivität L2, der Kapazität C2, dem Thyristor Th.2, dem Widerstand R12, der Diode D32, dem Transistor T22, dem Widerstand R40, dem Transistor T12, dem Widerstand R22, dem Widerstand R32, der Zenerdiode ZD2, der Diode D22 und dem Ladekondensator CL2.

In einer praktisch erprobten Schaltung hatten die für die Erfindung wesentlichen Bauteile folgenden Werte:
- R1:: 100 Ohm
- R2:: 4,7 kOhm
- R3:: 4,7 kOhm
- C:: 0,22 µF
- CL:: 1000 µF
- L:: 50 µH
- G1:: BYW 72 oder BY 296
- D2:: BA 157
- D3:: 1N4148
- T1:: BC558B
- T2:: BC548C
- Th:: ESM750
- ZD:: ZPD39V
- NF-Endstufen:: 2xTDA2040

- C1/C2 =: 220 nF/100 V
- L1/L2 =: 50 µH
- R41-R46 =: 1 kOhm
- C40/C41 =: 10 nF
- Th.1/Th2. =: ESM 30/G1
- R11/R12 =: 100 Ohm
- D31/D32 =: BA 157
- T21/T12 =: BC 546
- T11/22 =: BC 556
- ZD1/ZD2 =: ZPY 20
- R21/R22/R31/R32 =: 4,7 kOhm
- D21/D22 =: BY 297

## Patentansprüche

1. Netzteil für eine NF-Ton-Endstufe mit einem Transformator (1, 2), dessen Sekundärwicklung (2) über einen Gleichrichter (G1) an einen die Betriebsspannung (UB) der Endstufe führenden Ladekondensator (CL) angeschlossen ist, **dadurch gekennzeichnet**, daß zur Erzeugung einer Betriebsspannung (UB), die bei kleinem Laststrom (i) ansteigt, parallel zu dem Gleichrichter (G1) eine Spannungs-Verdopplerschaltung(C, D1, D2, S1, S2) liegt,

2. Netzteil nach Anspruch 1, **dadurch gekennzeichnet**, daß parallel zu der Sekundärwicklung (2) die Reihenschaltung eines Kondensators (C) und eines ersten Schalterelementes (S1) liegt und der Mittelpunkt der Reihenschaltung über ein zweites Schalterelement (S2) mit dem Ladekondensator (CL) verbunden ist.

3. Netzteil nach Anspruch 2, **dadurch gekennzeichnet,** daß das zweite Schalterelement durch einen Transistor (T) gebildet ist, an dessen Basis eine von der Betriebsspannung (UB) am Ladekondensator (CL) abgeleitete Spannung angelegt ist.

4. Netzteil nach Anspruch 2, **dadurch gekennzeichnet**, daß in Reihe zu dem Kondensator (C) eine Induktivität (L) liegt.

5. Netzteil nach Anspruch **dadurch gekennzeichnet,** daß der Kondensator der Spannungs-Verdopplerschaltung (C, D1, D2) so bemessen ist, daß bei hohem Laststrom (i) die von ihr in den Ladekondensator (CL) gelieferte Energie klein ist gegenüber der vom ersten Gleichrichter (G1) in den Ladekondensator (CL) gelieferten Energie.

6. Netzteil nach Anspruch 2, **dadurch gekennzeichnet**, daß das erste Schalterelement (S1) durch einen Thyristor (Th) gebildet und der Ladekondensator (CL) über eine Steuerschaltung an das Gate des Thyristors (Th) angeschlossen ist.

7. Netzteil nach Anspruch 6, **dadurch gekennzeichnet**, daß die Steuerschaltung eine derartige Schwellwerteigenschaft aufweist, daß oberhalb eines bestimmten Wertes der Betriebsspannung (UB) am Ladekondensator (CL) der Thyristor (Th) gesperrt wird.

8. Netzteil nach Anspruch 6, **dadurch gekennzeichnet**, daß der die Betriebsspannung (UB) führende Punkt (E) des Ladekondensators (CL) über eine Zenerdiode (ZD) mit der Basis eines ersten Transistors (T1) verbunden ist, dessen Emitter geerdet und dessen Kollektor über einen Widerstand (R2) mit der Kathode des Thyristors (Th) und außerdem mit der Basis eines zweiten Transistors (T2) verbunden ist, dessen Kollektor geerdet und dessen Emitter über die Reihenschaltung einer Diode (D3) und eines Widerstandes (R1) mit dem Gate des Thyristors (Th) verbunden ist und einem Widerstand R3 der zwischen Basis (T1) und Kathode des Thyristors (Th) liegt (Fig. 5).

## Claims

1. Power supply for an AF sound output stage including a transformer (1, 2) whose secondary winding (2) is connected via a rectifier (G1) to a charging capacitor (CL) carrying the operating voltage (UB) of the output stage, characterised in that, for the generation of an operating voltage (UB) which increases under low load currents (i), a voltage doubler circuit (C, D1, D2, S1, S2) is connected in parallel with the rectifier (G1) .

2. Power supply in accordance with Claim 1, characterised in that, the series circuit of a capacitor (C) and a first switching element (S1) is connected in parallel with the secondary winding (2) and the mid point of the series circuit is connected via a second switching element (S2) to the charging capacitor (CL) .

3. Power supply in accordance with Claim 2, characterised in that, the second switching element is formed by a transistor (T) to whose base a voltage derived from the operating voltage (UB) on the charging capacitor (CL) is applied.

4. Power supply in accordance with Claim 2, characterised in that, an inductance (L) is connected in series with the capacitor (C).

5. Power supply in accordance with Claim 1, characterised in that, the capacitor of the voltage doubler circuit (C, D1, D2) is dimensioned such that at high load currents (i) the energy delivered thereby into the charging capacitor (CL) is low relative to the energy delivered via the first rectifier (G1) into the charging capacitor (CL).

6. Power supply in accordance with Claim 2, characterised in that, the first switching element (S1) is formed by a thyristor (Th) and the charging capacitor (CL) is connected to the gate of the thyristor (Th) via a control circuit.

7. Power supply in accordance with Claim 6, characterised in that, the control circuit has a threshold value characteristic which is such that the thyristor (Th) is blocked above a particular value of the operating voltage (UB) on the charging capacitor (CL).

8. Power supply in accordance with Claim 6, characterised in that, the point (E) of the charging capacitor (CL) carrying the operating voltage (UB) is connected via a Zener diode (ZD) to the base of a first transistor (T1) whose emitter is earthed and whose collector is connected via a resistor (R2) to the cathode of the thyristor (Th) and also to the base of a second transistor (T2) whose collector is earthed and whose emitter is connected via the series circuit of a diode (D3) and a resistor (R1) to the gate of the thyristor (Th) and a resistor (R3) is located between the base (T1) and cathode of the thyristor (Th) (Fig. 5).

## Revendications

1. Boîte d'alimentation en courant pour un étage audio de sortie à basse fréquence munie d'un transformateur (1, 2) dont l'enroulement secondaire (2) est raccordé par le biais d'un redresseur (G1) à un condensateur de charge (CL) fournissant une tension de service (UB) à l'étage de sortie, caractérisé par le fait qu'un circuit doubleur de tension (C, D1, D2, S1, S2) est monté en parallèle avec le redresseur (G1) pour générer une tension de service (UB) qui augmente lorsque le courant de charge (i) est faible.

2. Boîte d'alimentation en courant selon la revendication 1, caractérisée par le fait qu'un circuit série composé d'un condensateur (C) et d'un premier élément de commutation (S1) est monté en parallèle avec l'enroulement secondaire (2) et que le point milieu du circuit série est relié au condensateur de charge (CL) par le biais d'un deuxième élément de commutation (S2).

3. Boîte d'alimentation en courant selon la revendication 2, caractérisée par le fait que le deuxième élément de commutation est réalisé sous la forme d'un transistor (T) à la base duquel est appliquée une tension dérivée de la tension de service (UB) aux bornes du condensateur de charge (CL).

4. Boîte d'alimentation en courant selon la revendication 2, caractérisée par le fait qu'une inductance (L) est branchée en série avec le condensateur (C).

5. Boîte d'alimentation en courant selon la revendication 1, caractérisée par le fait que la valeur du condensateur du circuit doubleur de tension (C, D1, D2) est telle qu'en cas de courant de charge (i) élevé, l'énergie qu'il délivre dans le condensateur de charge (CL) est faible par rapport à l'énergie délivrée dans le condensateur de charge (CL) par le premier redresseur (G1).

6. Boîte d'alimentation en courant selon la revendication 2, caractérisée par le fait que le premier élément de commutation (S1) est réalisé sous la forme d'un thyristor (Th) et que le condensateur de charge (CL) est raccordé à la gâchette du thyristor (Th) par le biais d'un circuit de commande.

7. Boîte d'alimentation en courant selon la revendication 6, caractérisée par le fait que le circuit de commande présente une caractéristique de valeur de seuil telle que le thyristor (Th) est bloqué au-dessus d'une valeur définie de la tension de service (UB) aux bornes du condensateur de charge (CL).

8. Boîte d'alimentation en courant selon la revendication 6, caractérisée par le fait que le point (E) du condensateur de charge (CL) sur lequel se trouve la tension de service (UB) est relié à la base d'un premier transistor (T1) par le biais d'une diode Zener (ZD), son émetteur est mis à la terre et son collecteur est relié à la cathode du thyristor (Th) par le biais d'une résistance (R2) ainsi qu'à la base d'un deuxième transistor (T2) dont le collecteur est relié à la terre et dont l'émetteur est relié à la gâchette du thyristor (Th) par le biais d'un circuit série composé d'une diode (D3) et d'une résistance (R1) et une résistance (R3) qui est branchée entre la base de (T1) et la cathode du thyristor (Th) (Figure 5).
